# EUROPEAN PATENT SPECIFICATION

(11) **EP 3 244 507 B1**
(45) Date of publication and mention of the grant of the patent: **22.07.2020**
(21) Application number: 17166764.5
(22) Date of filing: 18.04.2017
(51) Int. Cl.: H02J 7/00, H02J 50/12

(54) **CONTACTLESS POWER TRANSMISSION/RECEPTION APPARATUS**
VORRICHTUNG ZUR KONTAKTFREIEN STROMÜBERTRAGUNG
APPAREIL DE RÉCEPTION/TRANSMISSION DE PUISSANCE SANS CONTACT

(30) Priority: 28.04.2016 JP 2016090110
(43) Date of publication of application: 15.11.2017
(73) Proprietor: Toshiba TEC Kabushiki Kaisha, Tokyo 141-8562 (JP)
(72) Inventor: KATO, Masakazu, Shinagawa-ku, Tokyo 141-8562 (JP); KANAGAWA, Masahiro, Shinagawa-ku, Tokyo 141-8562 (JP)
(74) Representative: Bandpay & Greuter

(56) References cited:
- WO-A1-2015/122611
- DE-A1-102014 106 947
- US-A1- 2015 326 060

## Description

### FIELD

The present invention relates to the power transmission technologies in general, and embodiments described herein relate more particularly to a power transmission device which transmits power to a power reception device in a contactless manner, and a contactless power transmission/reception apparatus which transmits and receives power in a contactless manner.

### BACKGROUND

In recent years, power transmission devices, which transmit power in a contactless manner, spread. A contactless power transmission device is an apparatus which transmits power to a power reception device such as a portable terminal or a tablet terminal by using electromagnetic coupling such as electromagnetic induction or magnetic field resonance. The contactless power transmission device includes a power transmission circuit and a power transmission coil for transmitting power, and the power reception device includes a power reception coil for receiving power, a power reception circuit for using the received power for the drive of own device, a charging circuit for charging a secondary battery mounted in own device, and the like.

In the contactless power transmission device, it is required to suppress radiation noise to be low while power is transmitted to the power reception device with a high efficiency. Therefore, as the power transmission circuit of the contactless power transmission device, an amplifier in which switching loss is reduced by zero voltage switching (ZVS) and which uses resonance, such as an E-class amplifier is often used. The ZVS allows switching of switching elements such as a MOSFET in a zero-voltage state, is called soft switching, and has effects of reducing switching loss and implementing a highly efficient power transmission circuit.

Compared to hard switching which is a normal switching method, soft switching has advantages that the rising of a voltage or a current becomes gentle and the generation of noise is reduced. However, even in the soft switching, the generation of noise due to the switching of switching elements such as MOS-FET cannot be avoided, and therefore, in the contactless power transmission device, the switching noise is a major noise source.

Meanwhile, in the power reception device, in order to convert AC power which is received by the power reception coil, to DC power, a rectification circuit such as a full-wave rectification circuit is generally connected to the rear stage of the power reception coil. A full-wave rectification circuit in which four rectifier diodes are used and are connected in a bridge type is usually used, but noise which is generated due to rectification of the diodes is great. In addition, it is known that the generation of noise is reduced when using the Schottky barrier diode with a high speed instead of using a general diode. However, even when using the Schottky barrier diode, there is no change in that the diode is the noise source.

The power transmission coil for radiating power is connected to the power transmission circuit, the power reception coil for receiving power is connected to the power reception circuit, and each coil functions as an antenna. Therefore, if there is a noise source in the power transmission circuit and the power reception circuit, there is a problem in that the power transmission coil or the power reception coil functions as an antenna so as to radiate the noise. In order to realize low-noise by solving such a problem, techniques regarding shielding (for example, JP-A-2010-070048, and JP-A-2012-228150) are disclosed.

However, in the technique described in JP-A-2010-070048, since a shield box is just provided to the power transmission coil and the power reception coil, there is a problem in that shielding effects with respect to an electromagnetic field leaking from a transmission path between the power transmission coil and the power reception coil are low, and radiation noise cannot be sufficiently reduced. In the technique described in JP-A-2012-228150, in order to provide not only shields of a power transmission section and a power reception section, but also a large-sized shield for covering the outer side of the shields, there is a problem in that the shield structure is complicated and is increased in size.

WO 2015 / 122 611 A1 discloses a wireless charging device having an electromagnetic wave shielding function.

DE 10 2014 106 947 A1 discloses a contactless power transmission device for installation in a vehicle.

To solve such problems, there is provided a contactless power transmission device, by which power is to be transmitted to a power reception device in a contactless manner, the contactless power transmission device comprising:
a shield case which has an opening portion at one end portion thereof, and is configured for the power reception device to be inserted thereinto through the opening portion;
a power transmission circuit which is for transmitting power and is disposed in the shield case;
a power transmission coil which is disposed on the inner side in the shield case when viewed from the opening portion, and transmits AC power from the power transmission circuit to the power reception device; characterized in that:
   the shield case has a notch which is formed on side surfaces of the shield case, from edges of the opening portion toward the inner side such that both sides of a rear end portion of the power reception device in an insertion direction is positioned further on the inner side than the opening portion and a part of the rear end portion is exposed through the notch, for allowing the power reception device to be easily extracted from the shield case by the rear end portion being held by fingers from both sides of the notch; and
   the power transmission coil faces the opening portion and is disposed so as to be orthogonal to an insertion direction of the power reception device.

Preferably, the notch is formed in a curved shape at a central portion of the side surfaces of the shield case, from the opening portion toward the inner side.

The invention also relates to a contactless power transmission/reception apparatus comprising:
a power reception device; and
the power transmission device as defined above, in which power is transmitted to the power reception device in a contactless manner.

Suitably, the power reception device includes
a housing which can be accommodated in the shield case,
a power reception coil which is disposed in the housing so as to face the power transmission coil when the housing is accommodated in the shield case, and receives AC power transmitted from the power transmission coil in a contactless manner, and
a power reception circuit which is provided in the housing, and converts the AC power received by the power reception coil to DC power.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating a contactless power transmission/reception apparatus according to an embodiment.
FIGS. 2A and 2B are circuit diagrams illustrating examples of a rectification circuit used in the embodiment.
FIG. 3 is a configuration diagram schematically illustrating a contactless power transmission device according to the embodiment.
FIG. 4 is a perspective view illustrating a power transmission device and a power reception device according to the embodiment.
FIG. 5 is a perspective view illustrating a state in which the power reception device is accommodated in a shield case according to the embodiment.
FIGS. 6A and 6B are sectional views illustrating examples of the power transmission device and the power reception device according to the embodiment.
FIGS. 7A and 7B are sectional views illustrating other examples of the power transmission device and the power reception device which do not form part of the claimed invention.
FIG. 8A is a sectional view illustrating still another example of the power transmission device and the power reception device according to the embodiment. FIG. 8B is a sectional view illustrating an example of the power transmission device and the power reception device which do not form part of the claimed invention.
FIG. 9 is a diagram illustrating measurement results of radiation noise of the contactless power transmission device according to the embodiment.
FIG. 10 is a perspective view illustrating a modification example of the contactless power transmission device according to the embodiment.
FIGS. 11A and 11B are sectional views illustrating modification examples of the shield case of the contactless power transmission device according to the embodiment.

### DETAILED DESCRIPTION

An object of the exemplary embodiment is to provide a contactless power transmission device and a contactless power transmission/reception apparatus which have a shield structure in which noise can be sufficiently reduced and equipment can be easily extracted.

According to an embodiment, there is provided a contactless power transmission device which transmits power to a power reception device in a contactless manner, and includes a shield case which has an opening portion at one end portion thereof, and into which the power reception device can be inserted through the opening portion; a power transmission circuit which is for transmitting power and is disposed to correspond to the shield case; a power transmission coil which is disposed on the inner side in the shield case when viewed from the opening portion, and transmits AC power from the power transmission circuit to the power reception device; and a notch which is formed on side surfaces of the shield case, from the opening portion toward the inner side such that both sides of a rear end portion of the power reception device inserted into the shield case can be held.

Hereinafter, embodiments are described by referring to the drawings. The same reference numerals are given to the same elements in each drawing. The embodiments described herein can be applied mutatis mutandis to the systems as defined in the claims.

### First Embodiment

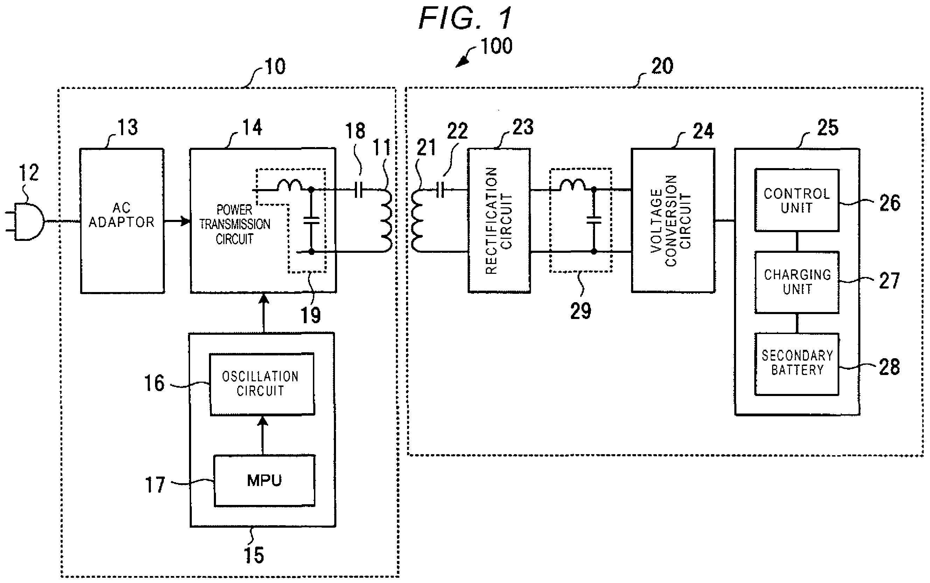

FIG. 1 is a block diagram illustrating a contactless power transmission/reception apparatus 100 according to an embodiment. The contactless power transmission/reception apparatus 100 includes a power transmission device 10 which transmits power, and a power reception device 20 which receives the transmitted power in a contactless manner.

The power transmission device 10 includes a power transmission coil 11, and the power reception device 20 includes a power reception coil 21. The power output from the power transmission device 10 is transmitted to the power reception device 20 by using electromagnetic coupling such as electromagnetic induction or magnetic field resonance between the power transmission coil 11 and the power reception coil 21.

DC power is supplied to the power transmission device 10 from an AC adaptor 13 which converts AC 100 V input from the plug 12 to a DC voltage. The power transmission device 10 includes a power transmission circuit 14 which generates transmission power required for the power transmission, and a control unit 15 which controls the power transmission circuit 14. The control unit 15 includes an oscillation circuit 16 and a microprocessor unit (MPU) 17. The oscillation circuit 16 supplies frequencies of power carrier waves to the power transmission circuit 14. The MPU 17 performs a drive control which causes the power transmission circuit 14 to be operated or stopped according to the necessity, a communication control with respect to the power reception device 20, and the like.

As the power transmission circuit 14, an amplifier circuit by a switching circuit in which the efficiency is considered to be important, for example, a D-class amplifier circuit or an E-class amplifier circuit is used. As the switching element, a MOS-FET is generally used. The power transmission circuit 14 performs soft switching by zero voltage switching (ZVS) or zero current switching (ZCS). By performing soft switching, switching loss is reduced, and switching noise and radiation noise can be reduced.

As the oscillating frequency of the oscillation circuit 16, that is, the switching frequency of the power transmission circuit 14, for example, a frequency of 6.78 MHz is used. The output of the power transmission circuit 14 is supplied to the power transmission coil 11 through a resonance capacitor 18, and power is transmitted from the power transmission coil 11.

The power reception device 20 includes a resonance circuit configured of the power reception coil 21 and a resonance capacitor 22, a rectification circuit 23, a voltage conversion circuit 24, and a load circuit 25. AC power transmitted through the resonance circuit configured of the power reception coil 21 and the resonance capacitor 22 is converted to a DC voltage by the rectification circuit 23 (for example, a diode full-wave rectification circuit). The converted DC voltage is converted, by the voltage conversion circuit 24, to a proper voltage by which the load circuit 25 can be operated. In this manner, the resonance capacitor 22, the rectification circuit 23, and the voltage conversion circuit 24 configure a power reception circuit which converts AC power received by the power reception coil to DC power.

The load circuit 25, for example, is a circuit of electronic equipment such as a portable terminal or a tablet terminal, and includes a control unit 26, a charging unit 27 and a secondary battery 28. Power received by the power reception device 20 is used for charging the secondary battery 28 built in the electronic equipment, or the like. The control unit 26 is configured of a microcomputer including a CPU, and controls the charging unit 27 so that the charging of the secondary battery 28 is appropriately controlled. In addition, the control unit 26 controls the communication with respect to the power transmission device 10.

The switching element such as a MOS-FET used in the power transmission circuit 14 performs switching at a high frequency of 6.78 MHz, and thus generates noise of a frequency of 6.78 MHz and harmonic frequencies of 6.78MHz. By providing a low pass filter 19 to an output port of the power transmission circuit 14, noise can be reduced, but the noise which is not sufficiently reduced is radiated from the power transmission coil 11 or a cable which connects the plug 12 to the AC adaptor 13.

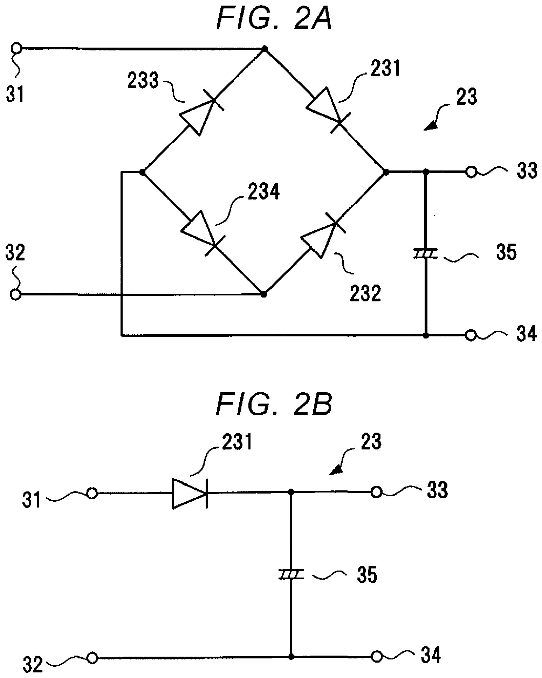

In the power reception device 20, the rectification circuit 23 is the major noise source. As the rectification circuit 23, for example, a bridge-type full-wave rectification circuit as illustrated in FIG. 2A or a half-wave rectification circuit as illustrated in FIG. 2B is used.

In the full-wave rectification circuit 23 in FIG, 2A is configured of diodes 231 to 234, the anode of the diode 231 and the cathode of the diode 233 are connected to one input port 31 of the full-wave rectification circuit 23, the anode of the diode 232 and the cathode of the diode 234 are connected to the other input port 32. In addition, cathodes of the diode 231 and the diode 232 are connected to an output port 33, and anodes of the diode 233 and the diode 234 are connected to a reference potential port 34 (earth port). In addition, a smoothing capacitor 35 is connected between the output port 33 and the reference potential port 34 (earth port), and a DC voltage is obtained from both ends of the smoothing capacitor 35.

In the half-wave rectification circuit 23 in FIG. 2B, the anode of the diode 231 is connected to the input port 31, and the cathode of the diode 231 is connected to the output port 33. The smoothing capacitor 35 is connected between the output port 33 and the reference potential port 34 (earth), and a DC voltage is obtained from both ends of the smoothing capacitor 35.

As the diode for the rectification of a high frequency as 6.78 MHz, the Schottky barrier diode in which the forward voltage drop is small is used, and thus it is possible to improve the rectifying efficiency. In addition, as the smoothing capacitor 35 connected to the output port 33 of the rectification circuit 23, an electrolytic capacitor or a ceramic capacitor is used.

In some cases, the noise accompanied by the rectification of the diode may not be removed by the smoothing capacitor 35 only. Therefore, by connecting a low pass filter 29 (FIG. 1) to the rear stage of the rectification circuit 23, it is possible to reduce noise. Even in such a case, noise is transferred to the power reception coil 21 connected to the input port 31, and is radiated from the power reception coil 21.

The noise radiated from the contactless power transmission device necessarily satisfies a regulation value stipulated by the Radio Act of each country. In case of Japan, the regulation value of the radiation noise is stipulated by the Radio Act. In addition, if 6.78 MHz as the industry-science-medical (ISM) frequency is used as the power transmission frequency, the restriction target is under the CISPR 11 as the International Standards and the FCC Part 18 in USA. In addition to the noise radiated to the space, noise conducting the power supply line is also regulated.

However, in case of relatively small devices such as a portable terminal or portable equipment, if the power transmission device and power reception device are input in the shield box and are electromagnetically sealed such that electromagnetic waves do not leak, the fact that the radiation noise can significantly be reduced is generally known.

For example, a case in which the entirety of small equipment such as a portable terminal or portable equipment is input in the shield box, and a shielding door is provided to the shield box may be considered, but in this case, it is necessary to open and close the door of the shield box for extracting and inserting the equipment, which becomes complicated. In addition, the shield device itself is increased in size.

A case in which a shielding door is not provided, the depth of the shield box is lengthened, and the power reception device (portable terminal or portable equipment) is accommodated in the shield box sufficiently is also considered. However, in a case where the power reception device is accommodated in the shield case of which the depth is lengthened, the effect of reducing radiation noise is improved, but there is a problem that it is difficult to extract the power reception device from the shield case.

In the embodiment, the contactless power transmission device is provided in which the power transmission device 10 and the power reception device 20 are covered by a case (shield case) having shielding effects, the power reception device 20 can be extracted through the opening portion of the shield case, the opening area of the shield case is reduced as much as possible, and thus the power reception device 20 is easily extracted and inserted.

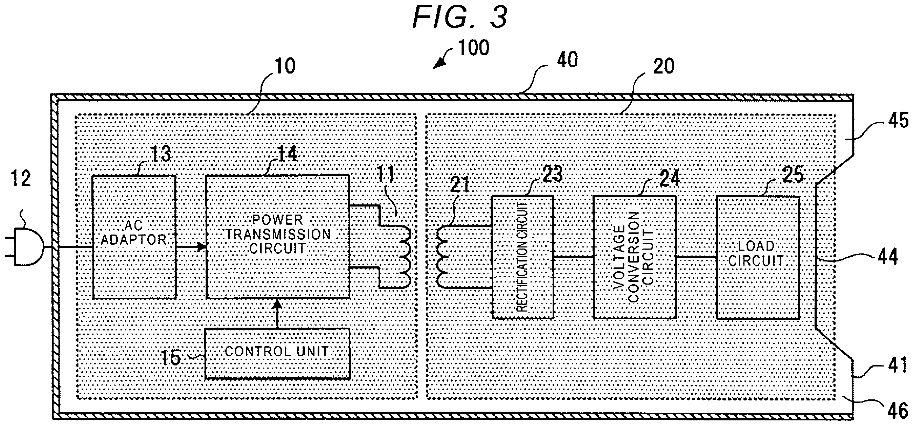

FIG. 3 is a configuration diagram schematically illustrating the contactless power transmission device according to the embodiment. In the example of FIG. 3, the power transmission device 10 including the power transmission coil 11 is provided in a shield case 40. The shield case 40 includes an opening portion 41 at one end portion thereof, and the power reception device 20 can be accommodated in the shield case 40 through the opening portion 41. In FIG. 3, a case in which the AC adaptor 13 is included in the power transmission device 10 is illustrated, but the AC adaptor 13 can be configured as a separate circuit component.

The power transmission coil 11 is attached to the inner side of the shield case 40 when viewed from the opening portion 41. In the power reception device 20, the power reception coil 21 is disposed at a position facing the power transmission coil 11, and when the power reception device 20 is accommodated in the shield case 40, the power transmission coil 11 and the power reception coil 21 become close to each other so that power can be transmitted.

The size of the inner circumference of the shield case 40 is set to be slightly greater than that of the outer circumference of the power reception device 20 such that the efficiency of transmitting power does not deteriorate due to the deviation in the position, at which the power transmission coil 11 and the power reception coil 21 face each other, being increased. For example, the gap between the outer circumference of the power reception device 20 and the inner circumference of the shield case 40 is within about 2 to 3 cm, and thus even if the position of the power reception device 20 is deviated in the shield case 40, the deviation is minimized.

The power transmission coil 11 is provided in the shield case 40, but the circuit part configuring the power transmission device 10 except for the power transmission coil 11 may be disposed in the same shield case 40, and may be integrally disposed to the outside of the shield case 40 so as to correspond to the shield case 40. In addition, a configuration in which only the AC adaptor 13 is provided to the outside of the shield case 40 may be adopted.

In a case where the circuit part except for the power transmission coil 11 is disposed to the outside of the shield case 40, a countermeasure for noise such as inserting the circuit part into a shield case separate from the shield case 40, is necessary so that noise is not radiated.

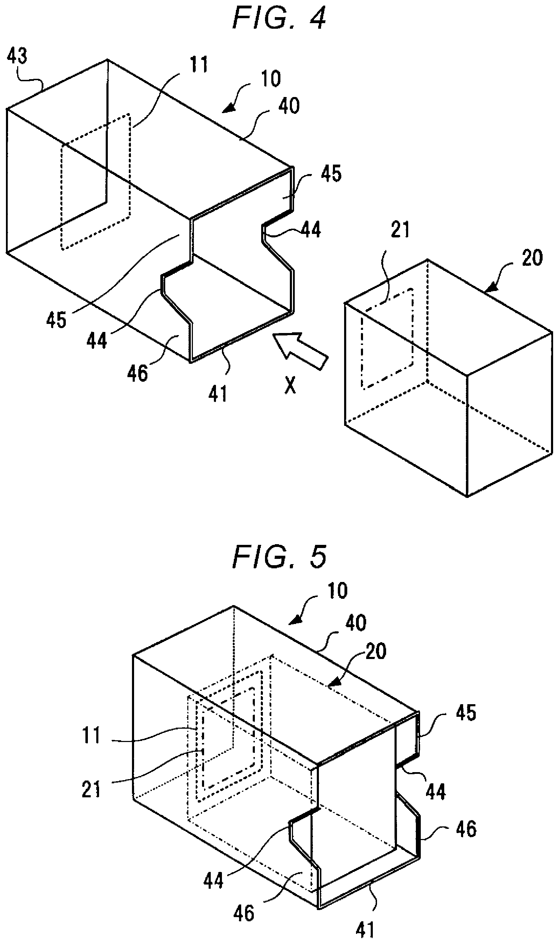

FIG. 4 is a perspective view illustrating the power transmission device 10 and the power reception device 20 of the embodiment. The power transmission device 10 is configured to be in the shield case 40. The shield case 40 has a box shape, and the power reception device 20 can be extracted and inserted through the opening portion 41. If an insertion direction of the power reception device 20 is set as an arrow X direction, the power transmission coil 11 is attached to the inner side of the shield case 40 which faces the opening portion 41, in a direction orthogonal to the insertion direction X (vertically). The power transmission coil 11 may be formed on a printed circuit board or formed by wirings. In addition, the circuit part of the power transmission device 10 except for the power transmission coil 11 may be disposed between the power transmission coil 11 and an inner-side end surface 43 of the shield case 40.

In the power reception device 20, the power reception coil 21 is disposed at a position facing the power transmission coil 11. If the power reception device 20 is inserted into the shield case 40 in a depth direction through the opening portion 41, and is inserted up to a position where the power reception device bumps into the power transmission coil 11, the power transmission coil 11 and the power reception coil 21 face each other at a close range within 2 to 3 cm, and power can be transmitted in a contactless manner.

The notches 44 are formed on side surfaces of the shield case 40, from the edges of the opening portion 41 toward the inner side, and thus the power reception device 20 is easily extracted and inserted. For example, when the power reception device 20 is accommodated in the shield case 40, the front end portion of the power reception device 20 in the insertion direction faces the power transmission coil 11. Meanwhile, the rear end portion of the power reception device 20 in the insertion direction is positioned further on the inner side than the opening portion 41, but a part of the rear end portion is exposed through the notch 44.

That is, the notches 44 are almost formed at the central portion of both sides of the power reception device 20 in the insertion direction X, that is, both side surfaces of the shield case 40 except for the bottom surface portion and the ceiling portion.

FIG. 5 is a perspective view schematically illustrating a state in which the power reception device 20 is accommodated in the shield case 40. As illustrated in FIG. 5, if the power reception device 20 is inserted into the shield case 40, and pushed up to a position where the power reception device bumps into the power transmission coil 11, the power reception coil 21 and the power transmission coil 11 closely face each other. Accordingly, power can be transmitted from the power transmission device 10 to the power reception device 20 in a contactless manner. In addition, in this state, the rear end portion of the power reception device 20 is positioned further on the inner side than the opening portion 41, but a part of the rear end portion is exposed through the notch 44.

Accordingly, when the power reception device 20 is extracted from the shield case 40, if the power reception device 20 is extracted by the rear end portion thereof being held by fingers from both sides of the notch 44, the power reception device 20 can be easily extracted.

Since the notches 44 are almost formed at the central portion of the both side surfaces of the shield case 40, protrusions 45 and 46 are generated on the upper side and the lower side of the notch 44. Therefore, the most part of the rear end portion of the power reception device 20 is surrounded by the shield case 40, and thus electromagnetic waves radiated through the opening portion 41 can be reduced. Actually, it was confirmed through experiments that if the protrusions 45 and 46 are not provided, the noise level is increased by several dB to 10 dB or more.

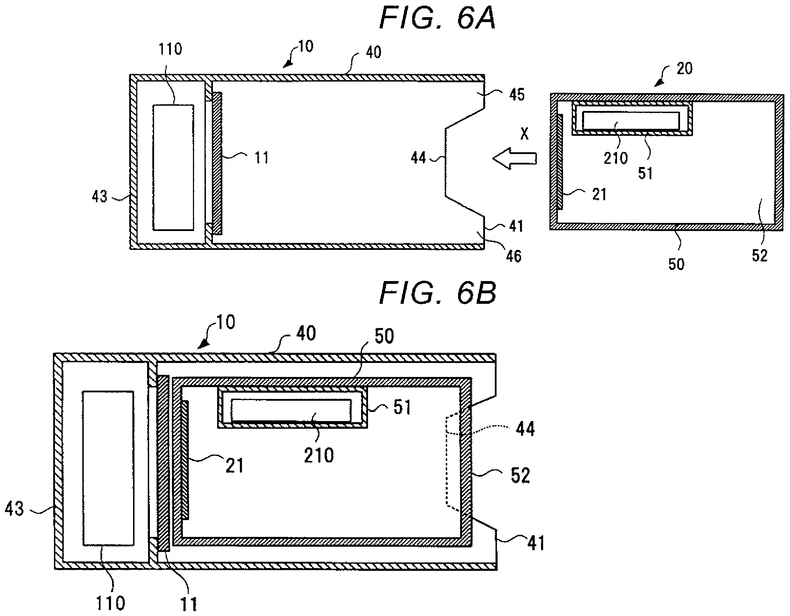

FIGS. 6A and 6B are sectional views illustrating examples of the power transmission device 10 provided in the shield case 40, and the power reception device 20, FIG. 6A illustrates a state in which the power reception device 20 is separated from the shield case 40, and FIG. 6B illustrates a state in which the power reception device 20 is accommodated in the shield case 40.

As illustrated in FIG. 6A, the shield case 40 has a box shape, and the power reception device 20 can be extracted and inserted through the opening portion 41. The power transmission coil 11 is attached to the inner side of the shield case 40 which faces the opening portion 41, in a direction orthogonal to the insertion direction X (vertically). In this case, the power transmission coil 11 is a printed coil formed on the printed circuit board. A circuit part 110 of the power transmission device 10 except for the power transmission coil 11 is disposed on the outer side of the power transmission coil 11, that is, between the power transmission coil 11 and the inner-side end surface 43 of the shield case 40. The notch 44 is formed on the side surfaces of the shield case 40, from the edges of the opening portion 41 toward the inner side.

The power reception device 20 includes a housing 50 of a shape so as to be accommodated in the shield case 40, and the power reception coil 21 is attached to a surface in the housing 50 which faces the power transmission coil 11. A power reception circuit 210 such as the rectification circuit 23 of the power reception device 20 except for the power reception coil 21 is disposed in a shield case 51 provided in the housing 50. The shield case 51 and the power reception circuit 210 are provided on the ceiling portion or the bottom surface portion of the housing 50. FIGS. 6A and 6B illustrate a case where those are provided on the ceiling portion.

As illustrated in FIG. 6B, if the power reception device 20 is inserted into the shield case 40 through the opening portion 41, and is accommodated up to a position where the power reception device bumps into the power transmission coil 11, the power transmission coil 11 and the power reception coil 21 face each other at a close range within 2 to 3 cm, and power can be transmitted in a contactless manner.

In addition, when the power reception device 20 is accommodated in the shield case 40, a rear end portion 52 of the power reception device 20 (the housing 50) is positioned further on the inner side than the opening portion 41, but a part of the rear end portion 52 is exposed through the notch 44. Accordingly, when the power reception device 20 is extracted from the shield case 40, if the power reception device 20 is extracted by the rear end portion 52 being held by fingers from both sides of the notch 44, the power reception device 20 can be easily extracted.

In FIGS. 6A and 6B, a case in which the power transmission coil 11 is provided to be along the inner-side surface of the shield case 40 is described, but the power transmission coil 11 may be provided to be along another surface in the shield case 40, for example, the bottom surface portion, the ceiling portion, or the side surface portion, in addition to the shield case 40 being provided on the inner side. In addition, the power transmission coil may be provided on two or more surfaces.

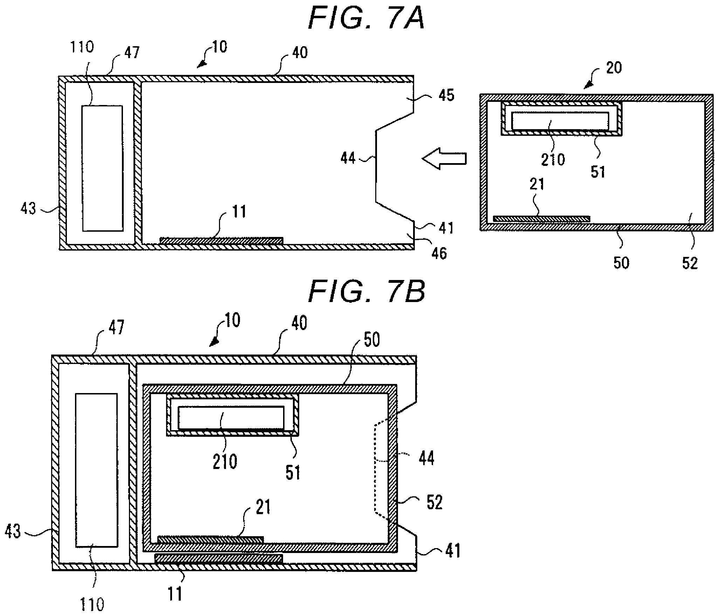

FIGS. 7A and 7B are sectional views illustrating other examples of the power transmission device 10 provided in the shield case 40, and the power reception device 20 which do not form part of the claimed invention. FIG. 7A illustrates a state in which the power reception device 20 is separated from the shield case 40, and FIG. 7B illustrates a state in which the power reception device 20 is accommodated in the shield case 40.

As illustrated in FIG. 7A, the shield case 40 has a box shape, and the power reception device 20 can be extracted and inserted through the opening portion 41. The power transmission coil 11 is attached to the bottom surface portion on the inner side in the shield case 40 when viewed from the opening portion 41, to be parallel with the insertion direction X (horizontally). In addition, a separate shield case 47 is integrally provided to the outer side of the shield case 40, and the circuit part 110 of the power transmission device 10 except for the power transmission coil 11 is disposed in the shield case 47. The notches 44 are formed on the side surfaces of the shield case 40, from the edges of the opening portion 41 toward the inner side.

The power reception device 20 includes the housing 50 of a shape so as to be accommodated in the shield case 40, and the power reception coil 21 is attached at a position (bottom surface) in the housing 50 which faces the power transmission coil 11. The power reception circuit 210 such as the rectification circuit 23 of the power reception device 20 except for the power reception coil 21 is disposed in the shield case 51 provided in the housing 50. The shield case 51 and the power reception circuit 210 are provided on the ceiling portion or the bottom surface portion of the housing 50. FIGS. 7A and 7B illustrate a case where those are provided on the ceiling portion.

As illustrated in FIG. 7B, if the power reception device 20 is inserted into the shield case 40 through the opening portion 41, and is inserted up to the bumping position, the power transmission coil 11 and the power reception coil 21 face each other at a close range within 2 to 3 cm, and power can be transmitted in a contactless manner.

In addition, when the power reception device 20 is accommodated in the shield case 40, a rear end portion 52 of the power reception device 20 is positioned further on the inner side than the opening portion 41, but a part of the rear end portion 52 is exposed through the notch 44. Accordingly, when the power reception device 20 is extracted from the shield case 40, if the power reception device 20 is extracted by the rear end portion 52 being held by fingers from both sides of the notch 44, the power reception device 20 can be easily extracted.

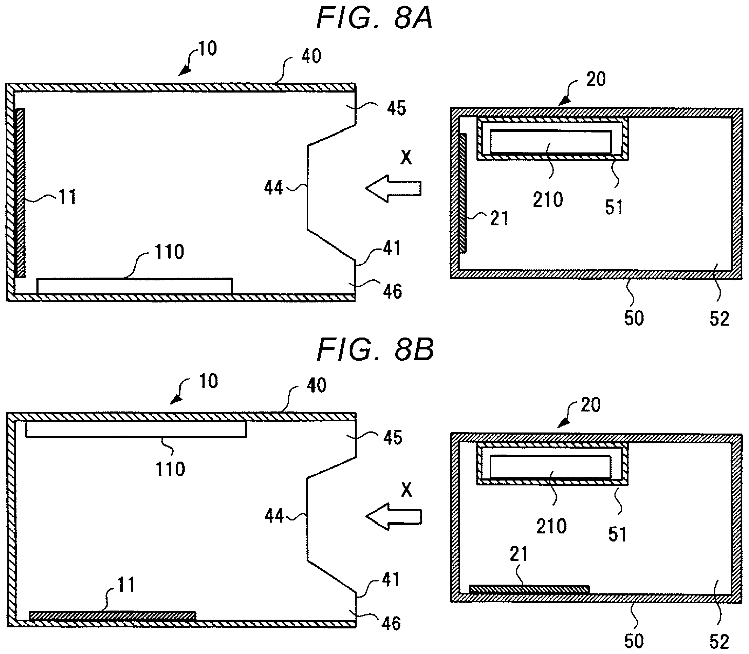

FIG. 8A is a sectional view illustrating still another example of the power transmission device 10 provided in the shield case 40, and the power reception device 20. FIG. 8B illustrates an example which do not form part of the claimed invention. FIGS. 8A and 8B illustrate a state in which the power reception device 20 is separated from the shield case 40.

In the example of FIG. 8A, the shield case 40 has a box shape, and the power reception device 20 can be extracted and inserted through the opening portion 41. The power transmission coil 11 is attached to the inner side of the shield case 40 which faces the opening portion 41, in a direction orthogonal to the insertion direction X (vertically).

In addition, the circuit part 110 of the power transmission device 10 except for the power transmission coil 11 is disposed on the bottom surface portion on the inner side of the shield case 40 which faces the opening portion 41. The notch 44 is formed on the side surfaces of the shield case 40, from the edges of the opening portion 41 toward the inner side.

The power reception device 20 includes the housing 50 of a shape so as to be accommodated in the shield case 40, and the power reception coil 21 is attached to a surface in the housing 50 which faces the power transmission coil 11. The power reception circuit 210 such as the rectification circuit 23 of the power reception device 20 except for the power reception coil 21 is disposed in the shield case 51 provided in the housing 50. The shield case 51 and the power reception circuit 210 are provided on the ceiling portion or the bottom surface portion of the housing 50. FIG. 8A illustrates a case where those are provided on the ceiling portion.

If the power reception device 20 is inserted into the shield case 40 through the opening portion 41, and is accommodated up to the bumping position, the power transmission coil 11 and the power reception coil 21 face each other at a close range within 2 to 3 cm, and power can be transmitted in a contactless manner. In addition, when the power reception device 20 is accommodated in the shield case 40, a rear end portion 52 of the power reception device 20 is positioned further on the inner side than the opening portion 41, but a part of the rear end portion 52 is exposed through the notch 44.

In the example of FIG. 8B, the shield case 40 has a box shape, and the power reception device 20 can be extracted and inserted through the opening portion 41. The power transmission coil 11 is attached to the bottom surface portion on the inner side of the shield case 40 which faces the opening portion 41, to be parallel with the insertion direction X (horizontally).

In addition, the circuit part 110 of the power transmission device 10 except for the power transmission coil 11 is disposed on the ceiling portion on the inner side of the shield case 40 which faces the opening portion 41. The notches 44 are formed on the side surfaces of the shield case 40, from the edges of the opening portion 41 toward the inner side.

The power reception device 20 includes the housing 50 of a shape so as to be accommodated in the shield case 40, and the power reception coil 21 is attached to the bottom surface portion in the housing 50 which faces the power transmission coil 11. The power reception circuit 210 such as the rectification circuit 23 of the power reception device 20 except for the power reception coil 21 is disposed in the shield case 51 provided in the housing 50. The shield case 51 and the power reception circuit 210 are provided on the ceiling portion or the bottom surface portion of the housing 50. FIG. 8B illustrates a case where those are provided on the ceiling portion.

If the power reception device 20 is inserted into the shield case 40 through the opening portion 41, and is accommodated up to the bumping position, the power transmission coil 11 and the power reception coil 21 face each other at a close range within 2 to 3 cm, and power can be transmitted in a contactless manner. In addition, when the power reception device 20 is accommodated in the shield case 40, a rear end portion 52 of the power reception device 20 is positioned further on the inner side than the opening portion 41, but a part of the rear end portion 52 is exposed through the notch 44.

In FIGS. 8A and 8B, since the circuit part 110 is provided on the bottom surface portion or the ceiling portion of the shield case 40, a guide member which guides the power reception device 20 into the shield case 40 may be provided such that when the power reception device 20 is inserted into the shield case 40, the power reception device 20 does not collide with the circuit part 110. It is preferable that the size of the inner circumference of the shield case 40 is slightly greater than the outer circumference of the power reception device 20 in consideration that the circuit part 110 is equipped in the shield case.

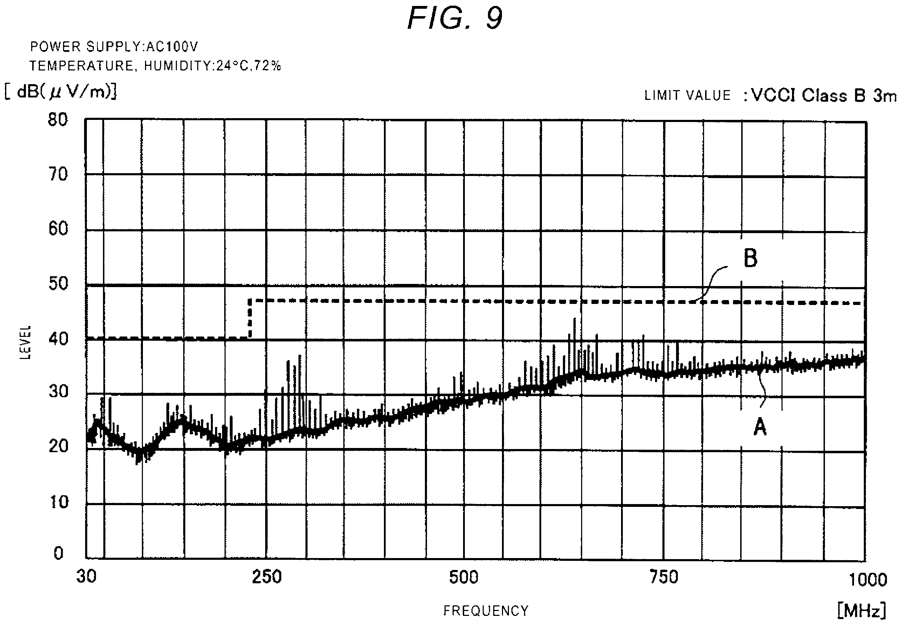

FIG. 9 is a diagram illustrating measurement results of radiation noise of the contactless power transmission device which uses a frequency of 6.78 MHz. FIG. 9 illustrates a measured value A of the radiation field strength at a distance of 3 m from the contactless power transmission device when the shield case 40 of the embodiment is used and power of 10 W is transmitted.

In FIG. 9, the vertical axis indicates the radiation field strength [dB (µV/m)], and the horizontal axis indicates the frequency (30 MHz to 1000 MHz). In FIG. 9, the dotted line B indicates the limit value (QP) of VCCI Class B, which is the Japanese voluntary standard regulation value. The measured value A is within the limit value (B) of VCCI Class B, and thus it can be known that the measured value A clears the limit value of VCCI Class B. That is, it can be known that the generation of noise of the high frequency of 6.78 MHz can be reduced.

Since the shield case 40 includes the opening portion 41, the electromagnetic field is slightly radiated through the opening portion 41. Therefore, as illustrated in FIG. 1, by incorporating the filter 19 into the power transmission device 10, incorporating the filter 29 into the power reception device 20, or providing a ferrite core to the cable which connects the plug 12 to the AC adaptor 13, noise can be reduced.

Accordingly, if such a noise reduction technique is used together, even if the notch 44 is formed on the shield case 40, effects of reducing noise can be obtained. In addition, the easiness of extracting and inserting the power reception device 20 with respect to the shield case 40 can be compatible with the effects of reducing noise.

The power transmission frequency of 6.78 MHz is described as an example, but the power transmission frequency is not limited to 6.78 MHz, and may be other frequencies.

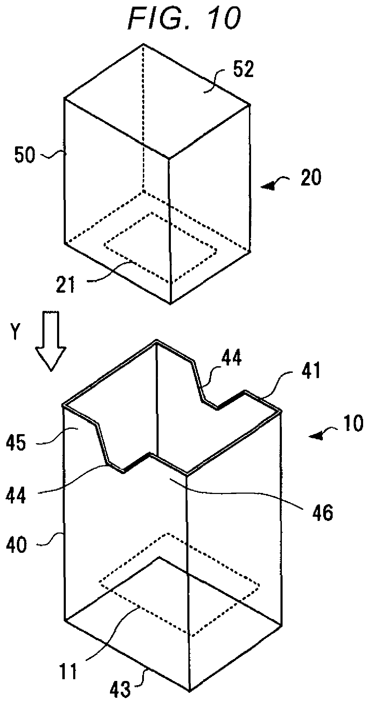

FIG. 10 is a perspective view illustrating a modification example of the contactless power transmission device according to the embodiment. In the example of FIG. 10, the shield case 40 is of a vertical type, and the power reception device 20 is inserted into the shield case 40 from above the shield case (in Y direction) to be accommodated. The shield case 40 has the same configuration as that in Fig. 4 except that by causing the shield case 40 to face upward, the power reception device 20 is extracted upward from the shield case 40 and inserted into the shield case 40 from above the shield case 40, and thus the detailed description will not be provided.

In the example of FIG. 10, if the power reception device 20 is inserted into the shield case 40 through the opening portion 41, and is inserted up to a position where the power reception device bumps into the power transmission coil 11, the power transmission coil 11 and the power reception coil 21 face each other at a close range within 2 to 3 cm, and power can be transmitted in a contactless manner.

In a case where the power reception device 20 is extracted from the shield case 40, since the notch 44 is provided, the power reception device 20 can be easily extracted. In addition, the notch 44 formed on the shield case 40 may have other shapes, and the shape is not particularly limited.

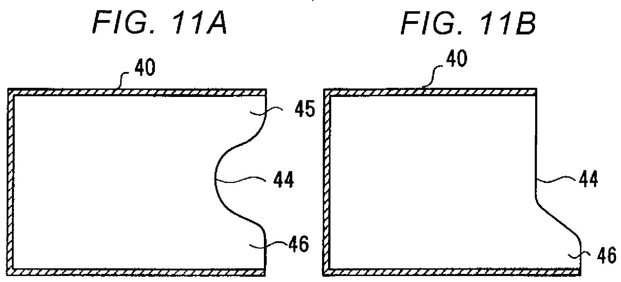

FIGS. 11A and 11B are sectional views illustrating modification examples of the shield case 40, and specifically illustrate other shapes of the notch 44. That is, in the examples of FIGS. 4 and 10, the notch 44 has a linear shape (trapezoidal shape), but the notch 44 may be formed in a curved shape such as a semicircular shape as illustrated in FIG. 11A.

Further, as another shape of the shield case 40, as illustrated in FIG. 11B, one of the protrusions 45 and 46 is provided and the other one is not provided. In FIG. 11B, the protrusion 46 is only provided, and thus the notch 44 is formed from the central portion to the other end portion. As illustrated in FIG. 11B, since the upper side protrusion 45 is not provided, the power reception device 20 can be further easily extracted and inserted. However, in this case, since the level of radiation noise is slightly increased compared to a case where the protrusions 45 and 46 are provided on both end portions, if there is margin for the regulation value of the noise, the above-described example can be adopted.

According to the embodiments described above, in the contactless power transmission device, radiation noise can be sufficiently reduced, and the power reception device can be easily extracted and inserted. Therefore, it is possible to provide a device suitable for portable equipment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims are intended to cover such forms or modifications as would fall within the scope of the inventions.

## Claims

1. A contactless power transmission device (10), by which power is to be transmitted to a power reception device (20) in a contactless manner, the contactless power transmission device comprising:
a shield case (40) which has an opening portion (41) at one end portion thereof and is configured for the power reception device (20) to be inserted thereinto through the opening portion (41);
a power transmission circuit (14) which is for transmitting power and is disposed in the shield case (40);
a power transmission coil (11) which is disposed on the inner side in the shield case (40) when viewed from the opening portion (41), and transmits AC power from the power transmission circuit (14) to the power reception device (20); **characterized in that**:
the shield case (40) has a notch (44) which is formed on side surfaces of the shield case (40), from edges of the opening portion (41) toward the inner side such that both sides of a rear end portion (52) of the power reception device (20) in an insertion direction (X) is positioned further on the inner side than the opening portion (41) and a part of the rear end portion (52) is exposed through the notch (44), for allowing the power reception device (20) to be easily extracted from the shield case (40) by the rear end portion (52) being held by fingers from both sides of the notch (44); and
the power transmission coil (11) faces the opening portion (41) and is disposed so as to be orthogonal to an insertion direction (X) of the power reception device (20).

2. The device according to claim 1,
wherein the notch is formed in a curved shape at a central portion of the side surfaces of the shield case, from the opening portion toward the inner side.

3. A contactless power transmission/reception apparatus comprising:
a power reception device; and
the power transmission device according to any one of claims 1 to 2, in which power is transmitted to the power reception device in a contactless manner.

4. The contactless power transmission/reception apparatus according to claim 3, wherein the power reception device includes
a housing which can be accommodated in the shield case,
a power reception coil which is disposed in the housing so as to face the power transmission coil when the housing is accommodated in the shield case, and receives AC power transmitted from the power transmission coil in a contactless manner, and
a power reception circuit which is provided in the housing, and converts the AC power received by the power reception coil to DC power.

## Patentansprüche

1. Kontaktlose Energieübertragungsvorrichtung (10), durch die Energie in einer kontaktlosen Weise an eine Energieempfangsvorrichtung (20) zu übertragen ist, wobei die kontaktlose Energieübertragungsvorrichtung Folgendes umfasst:
ein Abschirmgehäuse (40), das an seinem einen Endabschnitt einen Öffnungsabschnitt (41) aufweist und für das Einsetzen der Energieempfangsvorrichtung (20) darin durch den Öffnungsabschnitt (41) gestaltet ist,
eine Energieübertragungsschaltung (14), die für das Übertragen von Energie vorgesehen und in dem Abschirmgehäuse (40) angeordnet ist,
eine Energieübertragungsspule (11), die, von dem Öffnungsabschnitt (41) aus betrachtet, an der Innenseite des Abschirmgehäuses (40) angeordnet ist und Wechselstrom von der Energieübertragungsschaltung (14) an die Energieempfangsvorrichtung (20) überträgt, **dadurch gekennzeichnet, dass**:
das Abschirmgehäuse (40) eine Kerbe (44) aufweist, die an Seitenflächen des Abschirmgehäuses (40), ausgehend von Rändern des Öffnungsabschnitts (41) hin zur Innenseite, derart gebildet ist, dass beide Seiten eines hinteren Endabschnitts (52) der Energieempfangsvorrichtung (20) in einer Einsetzrichtung (X) näher zur Innenseite positioniert sind als der Öffnungsabschnitt (41) und ein Teil des hinteren Endabschnitts (52) durch die Kerbe (44) freiliegt, um das leichte Herausziehen der Energieempfangsvorrichtung (20) aus dem Abschirmgehäuse (40) zu ermöglichen, indem der hintere Endabschnitt (52) von beiden Seiten der Kerbe (44) von Fingern gehalten wird, und
die Energieübertragungsspule (11) dem Öffnungsabschnitt (41) zugewandt und derart angeordnet ist, dass sie rechtwinklig zu einer Einsetzrichtung (X) der Energieempfangsvorrichtung (20) liegt.

2. Vorrichtung nach Anspruch 1,
wobei die Kerbe in einer Kurvenform an einem mittleren Abschnitt der Seitenflächen des Abschirmgehäuses, ausgehend von dem Öffnungsabschnitt hin zur Innenseite, gebildet ist.

3. Kontaktlose Energieübertragungs-/Empfangsvorrichtung, Folgendes umfassend:
eine Energieempfangsvorrichtung und
die Energieübertragungsvorrichtung nach einem der Ansprüche 1 bis 2, in der Energie in kontaktloser Weise zur Energieempfangsvorrichtung übertragen wird.

4. Kontaktlose Energieübertragungs-/Empfangsvorrichtung nach Anspruch 3, wobei die Energieempfangsvorrichtung Folgendes beinhaltet:
ein Gehäuse, das in dem Abschirmgehäuse untergebracht werden kann,
eine Energieempfangsspule, die derart in dem Gehäuse angeordnet ist, dass sie der Energieübertragungsspule zugewandt ist, wenn das Gehäuse in dem Abschirmgehäuse untergebracht ist, und Wechselstrom empfängt, der von der Energieübertragungsspule in kontaktloser Weise übertragen wird, und
eine Energieempfangsschaltung, die in dem Gehäuse bereitgestellt ist und den von der Energieempfangsspule empfangenen Wechselstrom in Gleichstrom umwandelt.

## Revendications

1. Dispositif de transmission d'énergie sans contact (10), par lequel de l'énergie doit être transmise à un dispositif de réception d'énergie (20), de manière sans contact, le dispositif de transmission d'énergie sans contact comprenant :
un boîtier de blindage (40) qui présente une partie d'ouverture (41), à une partie d'extrémité de celui-ci, et qui est configuré de manière à permettre que le dispositif de réception d'énergie (20) soit inséré dans celui-ci à travers la partie d'ouverture (41) ;
un circuit de transmission d'énergie (14) qui est destiné à transmettre de l'énergie et qui est disposé dans le boîtier de blindage (40) ;
une bobine de transmission d'énergie (11) qui est disposée sur le côté intérieur dans le boîtier de blindage (40), lorsqu'il est observé à partir de la partie d'ouverture (41), et qui transmet une puissance alternative, du circuit de transmission d'énergie (14) au dispositif de réception d'énergie (20) ; **caractérisé en ce que** :
le boîtier de blindage (40) présente une encoche (44) qui est formée sur des surfaces latérales du boîtier de blindage (40), à partir des bords de la partie d'ouverture (41) vers le côté intérieur, de sorte que les deux côtés d'une partie d'extrémité arrière (52) du dispositif de réception d'énergie (20) dans une direction d'insertion (X) sont positionnés plus loin sur le côté intérieur que la partie d'ouverture (41), et de sorte qu'une partie de la partie d'extrémité arrière (52) est exposée à travers l'encoche (44), afin de permettre que le dispositif de réception d'énergie (20) soit facilement extrait du boîtier de blindage (40) en tenant la partie d'extrémité arrière (52), avec les doigts des deux côtés de l'encoche (44) ; et
la bobine de transmission d'énergie (11) fait face à la partie d'ouverture (41) et est disposée de manière à être orthogonale à une direction d'insertion (X) du dispositif de réception d'énergie (20).

2. Dispositif selon la revendication 1,
dans lequel l'encoche est formée en une forme incurvée au niveau d'une partie centrale des surfaces latérales du boîtier de blindage, de la partie d'ouverture vers le côté intérieur.

3. Appareil de transmission/réception d'énergie sans contact comprenant :
un dispositif de réception d'énergie ; et
le dispositif de transmission d'énergie selon l'une quelconque des revendications 1 à 2, dans lequel de l'énergie est transmise au dispositif de réception d'énergie de manière sans contact.

4. Appareil de transmission/réception d'énergie sans contact selon la revendication 3, dans lequel l'appareil de réception d'énergie inclut :
un logement qui peut être logé dans le boîtier de blindage ;
une bobine de réception d'énergie qui est disposée dans le logement de manière à faire face à la bobine de transmission d'énergie lorsque le logement est logé dans le boîtier de blindage, et qui reçoit une puissance alternative transmise à partir de la bobine de transmission d'énergie de manière sans contact ; et
un circuit de réception d'énergie qui est fourni dans le logement, et qui convertit la puissance alternative, reçue par la bobine de réception d'énergie, en une puissance continue.
